# EUROPÄISCHE PATENTSCHRIFT

(11) **EP 0 799 742 B1**
(45) Veröffentlichungstag und Bekanntmachung des Hinweises auf die Patenterteilung: **12.07.2000**
(21) Anmeldenummer: 97104239.5
(22) Anmeldetag: 13.03.1997
(51) Int. Cl.: B60P 1/44

(54) **Hubladebühne**
Loading tailgate
Hayon élévateur

(30) Priorität: 04.04.1996 DE 19613766
(43) Veröffentlichungstag der Anmeldung: 08.10.1997
(73) Patentinhaber: DAUTEL GMBH, D-74211 Leingarten (DE)
(72) Erfinder: Wild, Rolf, 74912 Kirchardt (DE)
(74) Vertreter: Clemens, Gerhard, Dr.-Ing.

(56) Entgegenhaltungen:
- DE-A- 2 837 668
- DE-A- 3 345 589
- DE-U- 8 710 027
- US-A- 4 079 988
- PATENT ABSTRACTS OF JAPAN vol. 007, no. 079 (M-204), 31.März 1983 & JP 58 004644 A (FUJI JUKOGYO KK), 11.Januar 1983,

## Beschreibung

### TECHNISCHES GEBIET

Die vorliegende Erfindung betrifft eine Hubladebühne entsprechend den Merkmalen des Oberbegriffes von Anspruch 1.

Hubladebühnen werden bei vielen Fahrzeugen angebracht, damit es möglich ist, das Fahrzeug ohne Hilfe von zusätzlichen Hebewerkzeugen oder Hebemaschinen, wie Gabelstapler, oder dergleichen. zu be- und entladen. Zum Verschieben/Schwenken der Ladeplattform werden bevorzugt über eine Steuereinrichtung betriebene hydraulische Kolben-Zylinder-Aggregate eingesetzt, die auf den Gelenkmechanismus einwirken.

### STAND DER TECHNIK

Aus vielen Patentschriften der Anmelderin sind Fahrzeuge mit Hubladebühnen bekannt. So offenbart beispielsweise die Patentschrift DE 33 45 589 C2 eine Hubladebühne mit einer speziell ausgebildeten Ansteuerschaltung. Als Tragprofileinrichtung, an der die Tragvorrichtung angelenkt ist, wird hierbei ein im wesentlichen quer zur Fahrtrichtung, im hinteren unteren Bereich des Fahrzeugs angeordnetes Rohrprofil eingesetzt. Die Gelenkmechanismen sind auf beiden Seiten des Fahrzeugs vorhanden und die Tragprofileinrichtung ist über entsprechende Aufhängelaschen an die tragende Chassiskonstruktion des Fahrzeugs zur Abtragung der auftretenden Beanspruchung angeschlossen. Das Kolben-Zylinder-Aggregat zum Heben bzw. Senken der Ladeplattform ist als Druckaggregat ausgebildet und im wesentlichen unterhalb des Gelenkmechanismus angeordnet. Eine gattüngsgemäße Hubladebühne ist zudem aus DE-A-28 37 668 bekannt.

### DARSTELLUNG DER ERFINDUNG

Der vorliegenden Erfindung liegt, ausgehend von dem genannten Stand der Technik, die Aufgabe bzw. das technische Problem zugrunde, eine verbesserte Hubladebühne anzugeben, die eine konstruktiv einfache und gleichzeitig stabile Konstruktion mit dauerhaft zuverlässiger Funktion ermöglicht und gleichzeitig eine preiswerte Fertigung erlaubt.

Die erfindungsgemäße Hubladebühne ist durch die Merkmale des unabhängigen Anspruchs 1 gegeben. Vorteilhafte Ausgestaltung und Weiterbildungen sind Gegenstand der abhängigen Ansprüche.

Die erfindungsgemäße Hubladebühne zeichnet sich demgemäß dadurch aus, daß der Zugarm oberhalb des oberen Gelenkarms angeordnet ist und der Zugarm und der obere Gelenkarm an der Trageinheit bzw. am Fahrzeug an eine um eine Achse drehbare Lasche angelenkt sind, wobei der Zugarm oberhalb und der obere Gelenkarm unterhalb der Achse angelenkt sind und die Lasche nur bei auf dem Boden aufgesetzter Plattform zum Neigen der Plattformspitze um die Achse drehbar ist und im übrigen gegen einen Anschlag gedrückt wird, wobei gemäß einer bevorzugten Ausgestaltung der Zugarm als, insbesondere hydraulisch betriebenes, Kolben-Zylinder-Aggregat ausgebildet ist.

Es hat sich als günstig hinsichtlich eines konstruktiv einfachen und wirkungsvollen Anschlusses herausgestellt, den Zugarm im vorderen Bereich an den oberen Gelenkarm anzulenken.

Das Ersetzen des seither unterseitig angeordneten Druck-Kolben-Zylinder-Aggregats durch ein Zug-Kolben-Zylinder-Aggregat, das oberhalb den Gelenkpunkten des oberen Gelenkarms angeordnet ist bringt erhebliche Vorteile mit sich. Aufgrund der erfindungsgemäßen Konstruktion vermindert sich die kräftemäßige Beanspruchung des oberen Gelenkarms deutlich.

Eine bevorzugte Weiterbildung zeichnet sich dadurch aus, daß der Verkürzungshubweg variabel einstellbar ist, insbesondere ein mechanischer Endanschlag am Zugarm vorhanden ist. Diese einstellbare Hub-Endbegrenzung verhindert ein Eindrücken des Abschlußträgers am Aufbau, da dessen geschlossene Endlage genau eingestellt werden kann, wodurch insgesamt dieser leichter gestaltet werden kann.

Gleichzeitig erhöht sich im hinteren Bereich die Bodenfreiheit, was aufgrund der bei vielen Fahrzeugen einzuhaltenden Abmessungsvorschriften günstig ist. Dadurch, daß ein Zugzylinder eingesetzt werden kann, vermindert sich auch das benötigte Öltankvolumen bei hydraulisch betriebenen Bauelementen deutlich. So kann in einem Ausführungsbeispiel die üblicherweise bei einem Druckzylinder benötigte Öltankgröße von ca. 6 Liter auf eine Ölgröße für den Zugzylinder von ca. 2 Liter beschränkt werden - bei vergleichbaren Lastverhältnissen, da die Kolbenseite des Zugzylinders erfindungsgemäß zusätzlich als Ölvorratsbehälter genutzt wird.

Ein weiterer nicht unerheblicher Vorteil ist darin zusehen, daß in Transportstellung der Hubzylinder eingefahren ist und somit in viel geringerem Ausmaß äußeren Einflüssen, wie Wetter, Strahlung, Tausalz, Beschädigung, etc. ausgesetzt ist als der Druckzylinder bei den bekannten Hubladebühnen, da letzterer in Transportstellung ausgefahren ist. Dadurch lassen sich Korrosionsschäden vermeiden und Wartungsintervallzeiten verlängern.

Aufgrund der geringeren Beanspruchung des oberen Gelenkarms kann die Lagerkonstruktion für den Gelenkarm konstruktiv leichter ausgebildet werden. Darüberhinaus wird die Möglichkeit eröffnet, Konstruktionen aus nicht hochfesten Stählen umzusetzen.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:

### KURZE BESCHREIBUNG DER ZEICHNUNG

- Fig. 1a: schematische Seitenansicht eines Lastkraftfahrzeugs mit einer Hubladebühne,
- Fig. 1b: schematische Detailansicht einer Hubladebühne mit einem oberseitig angeordneten Zug-Kolben-Zylinder-Aggregat in verschiedenen Funktionsstellungen,
- Fig. 2: schematische Systemdarstellung einer bekannten Hubladebühne mit Kräfteplan,
- Fig. 3,4,5: schematische Seitenansicht der Hubladebühne gemäß Fig. 1 mit Kräfteplan (Fig. 3) in verschiedenen Funktionsstellungen,
- Fig. 6: schematische Seitenansicht der Laschen zum Anschluß des Gelenkmechanismus an eine Tragprofileinrichtung,
- Fig. 7: Schnitt gemäß Linienführung G-G nach Fig. 6,
- Fig. 8: schematische Detailseitenansicht im Anschlußbereich gemäß Fig. 6 mit einer Endanschlagseinheit und
- Fig. 9: schematische Detaildraufsicht auf den Bereich gemäß Fig. 8.

### WEGE ZUM AUSFÜHREN DER ERFINDUNG

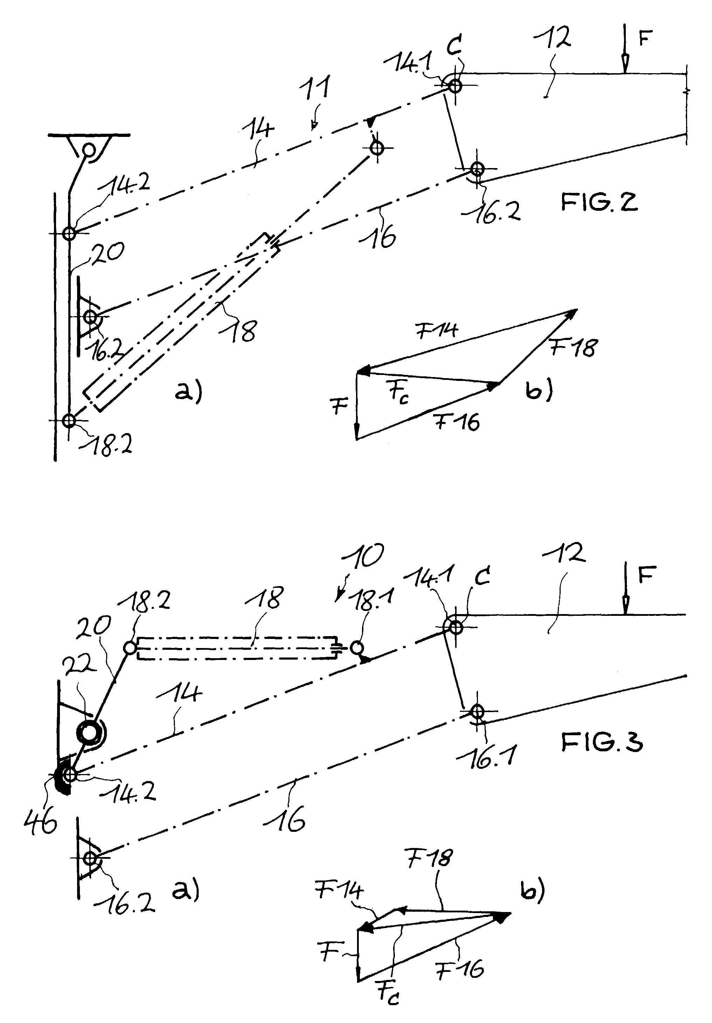

In Fig. 3a ist schematisch das statische System einer Hubladebühne 10 dargestellt. Die Hubladebühne 10 besitzt eine Plattform 12 an der ein parallelogrammgeführter Gelenkmechanismus mit einem oberen Gelenkarm 14 und einem unteren Gelenkarm 16 angelenkt ist. Der Gelenkarm 14 ist an einem oberen Gelenkpunkt 14.1 (C) an die Plattform 12 und in einem Gelenkpunkt 14.2 an eine Lasche 20 angelenkt, die um eine oberhalb des Gelenkpunktes 14.2 vorhandene Drehachse 22 drehbar gelagert ist.

Der untere Gelenkarm ist an einen Gelenkpunkt 16.1 unterhalb des Gelenkpunktes 14.1 an der Ladebordwand 10 und an einen Gelenkpunkt 16.2 ortsfest am Fahrzeug angelenkt. Die gedachte Verbindungslinie (Achse) der Gelenkpunkte 14.1, 14.2 und 16.1, 16.2 des oberen Gelenkarms 14 und des unteren Gelenkarms 16 sind im wesentlichen parallel zueinander angeordnet.

Im vorderen Bereich des oberen Gelenkarms 14 ist über einen Gelenkpunkt 18.1 ein Betätigungsarm 18 angeschlossen, der als Kolben-Zylinder-Aggregat 18 ausgebildet ist. Mit seinem anderen Ende ist das Kolben-Zylinder-Aggregat 18 über einen Gelenkpunkt 18.2 an die drehbare Lasche 20 angeschlossen, wobei der Gelenkpunkt 18.2 oberhalb der Drehachse 22 der Lasche 20 liegt. Der untere Gelenkarm 16 ist ebenfalls als Betätigungsarm und zwar als Kolben-Zylinder-Aggregat ausgebildet, was in den Figuren nicht näher dargestellt ist. Mittels dieses Kolben-Zylinder-Aggregats ist eine Neigung der Spitze der Plattform 12 durchführbar.

Im übrigen sind die Steuerungseinheiten, Steuerleitungen und sonstigen Bauelemente zum Betreiben der hydraulischen Kolben-Zylinder-Aggregate in den Figuren nicht dargestellt. Ein Aufbau einer Steuerung kann beispielsweise aus der deutschen Patentschrift DE 3345589 C2 dargestellt und kann von dem Fachmann in einfacher Art und Weise nachvollzogen werden.

In Fig. 2 ist schematisch das statische System einer Hubladebühne 11 dargestellt, wie sie zum Stand der Technik gehört. Gleiche Bauteile tragen dasselbe Bezugszeichen und werden nicht nochmals erläutert. Der wesentliche Unterschied der bekannten Hubladebühne 11 zu der in Fig. 3 dargestellten Hubladebühne 10 besteht darin, daß der Betätigungsarm 18 nicht oberhalb des oberen Gelenkarms 14 an den Gelenkarm 14 und die Lasche 20 angelenkt ist sondern unterhalb des oberen Gelenkarms 14. Diese Anordnung hat zur Folge, daß der Betätigungsarm (Kolben-Zylinder-Aggregat) als Druckarm ausgebildet ist, während hingegen der Betätigungsarm 18 der Hubladebühne 10 gemäß Fig. 3 als Zugarm (Zug-Kolben-Zylinder-Aggregat) ausgebildet ist.

In den Fig. 2b und 3b ist vergleichend schematisch das vereinfachte Kräftebild infolge einer auf der Ladeplattform 12 angreifenden Kraft F dargestellt. Die Kräfte F14, F16, F18 korrespondieren mit den zugehörigen Bezugszeichen der entsprechenden Bauteile. Wie ein Vergleich der Kräftebilder zeigt, wird das Kolben-Zylinder-Aggregat 18 der Hubladebühne 10 auf Zug beansprucht, während das Kolben-Zylinder-Aggregat gemäß Hubladebühne 11 auf Druck beansprucht wird. Ein gravierender Unterschied besteht weiterhin darin, daß die auf den Arm einwirkende Kraft F14 im Falle der Hubladebühne 10 sehr klein gehalten werden kann. Dadurch kann auch die Anschlußkonstruktion des oberen Gelenkarms 14 und der obere Gelenkarm 14 selbst in leichter Bauweise ausgebildet werden.

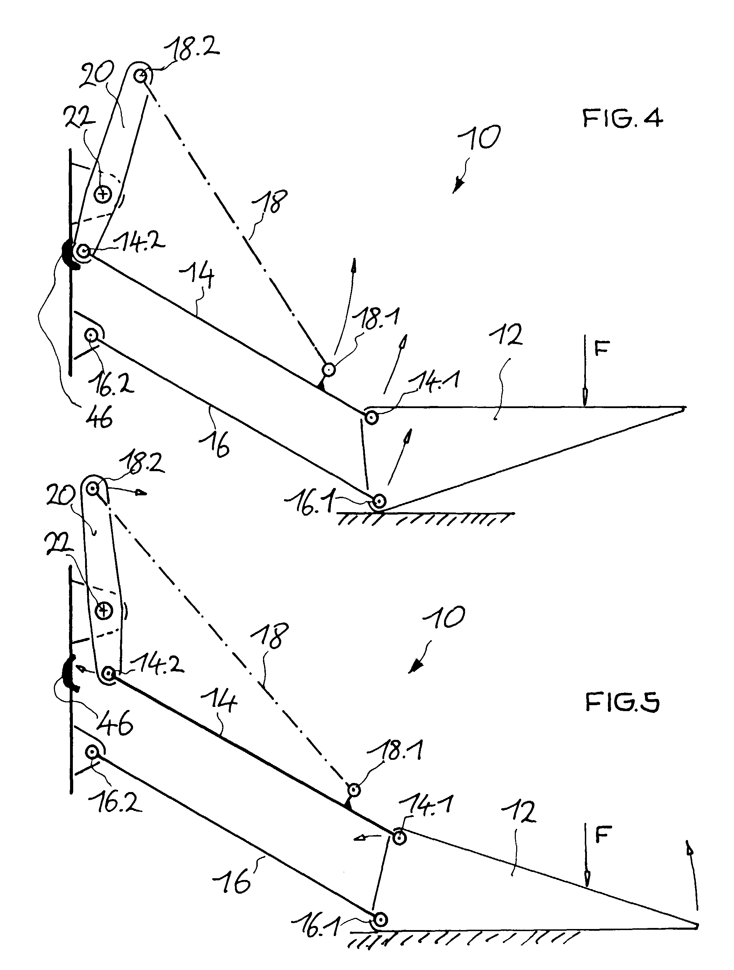

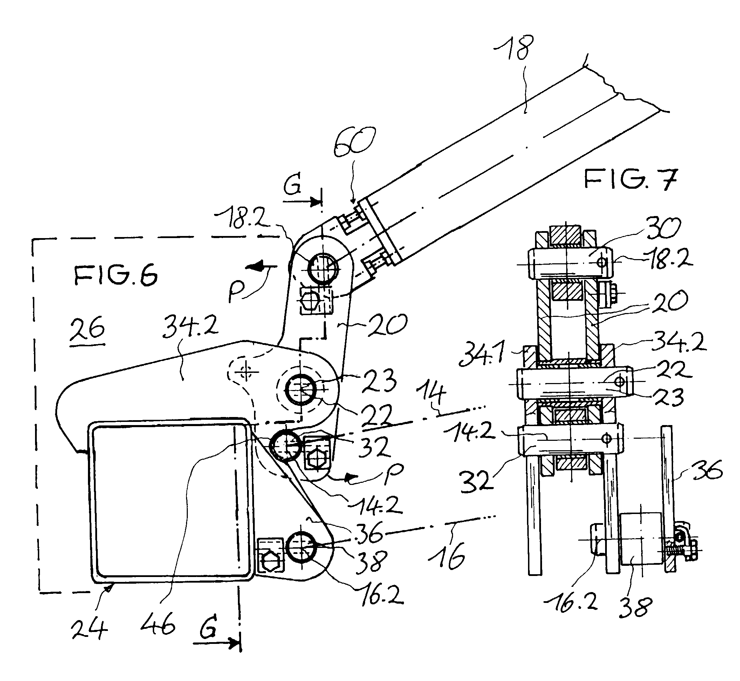

Die Ausbildung einer um die Drehachse 22 drehbaren Lasche 20, an der einerseits unterseitig der obere Gelenkarm 14.2 und andererseits oberseitig das Zug-Kolben-Zylinder-Aggregat 18 angelenkt ist, ermöglicht ein Neigen der Plattformspritze bei auf den Boden aufgesetzter Plattform 12 (siehe Fig. 4 und 5). Während des Hebens und Senkens der Plattform 12 durch Betätigung des Kolben-Zylinders-Aggregats 18 wird die Lasche 20 gegen einen Anschlag 46 gedrückt, so daß keine Verdrehung um die Achse 22 stattfinden kann.

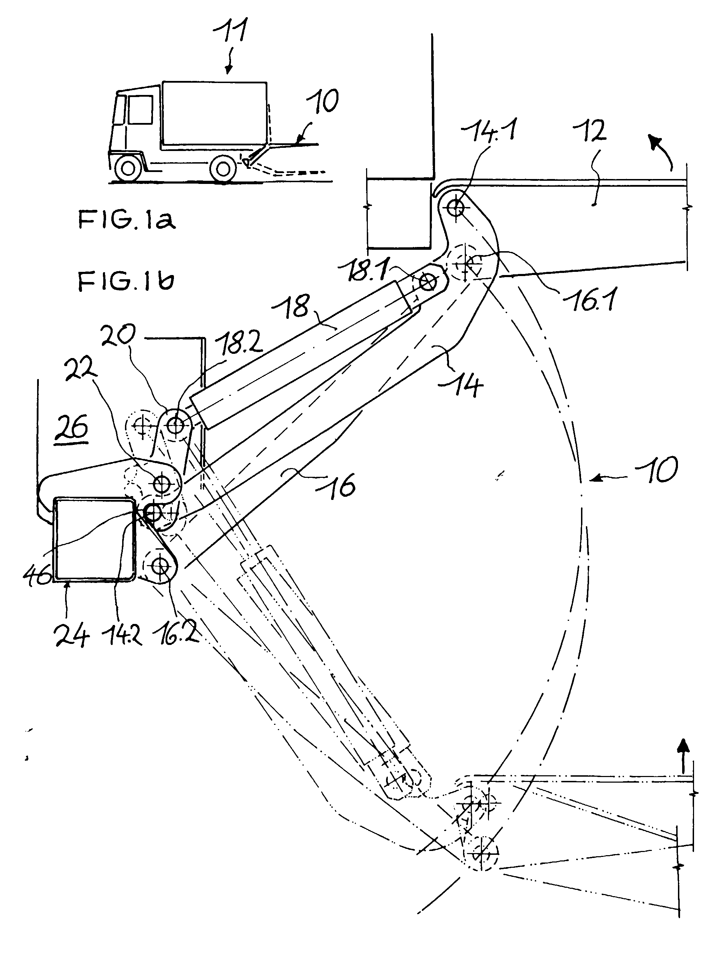

In Fig. 1a ist schematisch ein Fahrzeug 11 mit einer im hinteren unteren Bereich angeordneten Hubladebühne 10 dargestellt. Eine schematische konstruktive Umsetzung der Hubladebühne 10 ist in Fig. lb angegeben. Der Betätigungsarm 18 ist als Zug-Kolben-Zylinder-Aggregat ausgebildet und ist im vorderen Bereich des als Hubschwinge ausgebildeten oberen Gelenkarms 14 im Gelenkpunkt 18.1 angelenkt. Die Hubschwinge besitzt in ihrem vorderen Endbereich eine Kröpfung und bildet dort den Anlenkpunkt 14.1 an die Plattform 12. Der untere Gelenkarm 16 ist ebenfalls als Kolben-Zylinder-Aggregat ausgebildet und dient zur Neigungsverstellung der Plattform 12. Die unterschiedlichen Stellungen der Plattform 12 sind in Fig. 1 strichpunktiert dargestellt. Der parallelogrammartig geführte Gelenkmechanismus zusammen mit dem Kolben-Zylinder-Aggregat 18 sind über Laschen an eine entsprechende Traghohlprofileinheit 24 angeschlossen. Die Traghohlprofileinheit 24 selbst ist wiederum über schematisch gestrichelt dargestellte Aufhängelaschen 26 an dem Chassis des Fahrzeugs 11 befestigt.

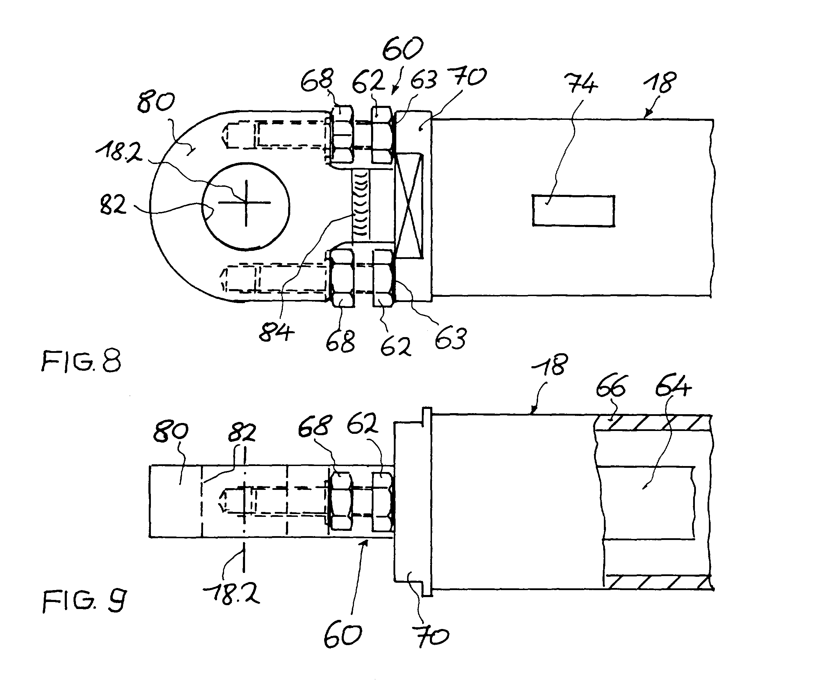

Eine konstruktive Ausgestaltung der Laschen ist in den Figuren 6 und 7 dargestellt. Die um die Drehachse 22 drehbare Lasche 20 ist doppelwandig ausgebildet. Als Drehachse (Anlenkpunkt 18.2) für das Kolben-Zylinder-Aggregat 18 ist ein Bolzen 30 im oberen Bereich der Lasche 20 angeordnet. Der Anlenkpunkt für den oberen Gelenkarm 14 wird ebenfalls durch einen Bolzen 32 gebildet, der unterhalb der Drehachse 22 angeordnet ist. Die Drehachse 22 wird wiederum durch einen Bolzen 23 umgesetzt, der in einer Doppellasche 34.1, 34.2, die die Tragprofileinheit 24 bereichsweise umgreift, gelagert ist. Der Anlenkpunkt 16.2 des unteren Gelenkarms 16 (Kolben-Zylinder-Aggregat) wird durch eine weitere an der Tragprofileinheit 24 angeschlossene Lasche 36 in Verbindung mit der benachbarten Lasche 34.2 mittels eines eingesteckten Bolzens 38 umgesetzt. Aufgrund der auftretenden Gewichts- und Lastverhältnisse werden die Laschen 20 im Uhrzeigersinn um die Drehachse 22 gegen einen durch die Doppellaschen 34.1, 34.2 gebildeten Anschlag 46 gedrückt, wobei dieser Anschlag 46 in Form einer Halbschale ausgebildet ist. Lediglich in dem Zustand, in dem die Plattform 12 im Bereich des Gelenkpunktes 16.1 auf dem Boden aufliegt, ist eine Drehbewegung der Lasche in Pfeilrichtung P möglich, was zur Folge hat, daß sich die Lasche 20 mit ihrem Bolzen 32 aus ihrem halbschalenförmigen Anschlag 46 löst und sich die Spitze der Plattform 12 bis zum Boden neigt (gemäß Fig. 5).

Wie bereits beschrieben, ist an den Gelenkpunkt 18.2 das Zug-Zylinder-Kolben-Aggregat 18 angelenkt. Im Anlenkpunkt 18.2 ist eine schematisch dargestellte Endanschlagseinheit 60 vorhanden, die den Verkürzungshubweg des Aggregats 18 begrenzt. Der Anschlag ist variabel einstellbar und damit den jeweiligen Gegebenheiten anpaßbar.

Der Anlenkpunkt 18.2 des Kolben-Zylinder-Aggregats 18 an die Doppellasche 20 über den Bolzen 30 mit der Endanschlagseinheit 60 ist in den Figuren 8 und 9 näher dargestellt. Zunächst ist an die Kolbenstange 64 des Kolben-Zylinder-Aggregats 18 ein Gelenkformteil 80 über eine Schweißnaht 84 angeschlossen, das eine auf den Außendurchmesser des Bolzens 30 abgestimmte kreisförmige Ausnehmung 82 besitzt, so daß ein gelenkiger Anschluß verwirklicht ist. Das Kolben-Zylinder-Aggregat 18 besitzt in seinem endseitigen Stirnbereich eine Führungsbuchse 70 mit Dichtsystem, durch die hindurch die Kolbenstange 64 dichtend verschiebbar gelagert ist. Zwischen dem Gelenkformteil 80 und der stirnseitigen Führungsbuchse 70 ist oberhalb und unterhalb der Kolbenstange 64 (Fig. 8) eine Schraube 62 in das Gelenkformteil 80 eingeschraubt, wobei die Einschraublänge der Schraube 62 variabel gestaltet werden kann. Zur Sicherung sind jeweils Schraubenmuttern 68 vorhanden.

Die Schrauben 62 bilden mit ihren Stirnkopfseiten 63 eine mechanische Endanschlagseinheit 60 für das Gehäuse des Zylinders 66 beziehungsweise die Führungsbuchse 70 und damit für das Kolben-Zylinder-Aggregat 18. Dadurch kann der Verkürzungshubweg des Aggregats 18 variabel eingestellt werden. In Fig. 8 ist noch schematisch an der Außenwandung des Zylinders 66 des Aggregats 18 eine Ölanschlußöffnung 74 für die Versorgung des Aggregats 18 mit Hydrauliköl dargestellt.

Die dargestellte Laschenkonstruktion zeigt eine mögliche konstruktive Umsetzungsmöglichkeit des Anschlusses des Gelenkmechanismus auf. Weitere Umsetzungsarten sind möglich.

Ebenso ist das Hydrauliksystem im einzelnen nicht dargestellt. Die Umsetzung ist für einen Fachmann beispielsweise anhand üblichen technischen Wissens möglich.

## Patentansprüche

1. Hubladebühne (10), insbesondere für Fahrzeuge (11), mit
- einer Plattform (12),
- einer Tragvorrichtung mit einem parallelogrammgeführten Gelenkmechanismus mit
-- einem oberen Gelenkarm (14),
-- einem im wesentlichen parallel zum oberen Gelenkarm (14) geführten unteren Gelenkarm (16), wobei
-- beide Gelenkarme (14; 16) an der Plattform (12) und an einer Trageinheit bzw. an dem Fahrzeug (11) direkt oder indirekt angelenkt sind (14.1, 14.2; 16.1, 16.2) und
- einem weiteren an den Gelenkmechanismus zum Heben und Senken der Plattform (12) angelenkten Betätigungsarm (18), wobei
- der weitere Betätigungsarm (18) als Zugarm (18) mit Verlängerungs- und Verkürzungsmöglichkeit ausgebildet ist,
- der Zugarm (18) oberhalb des oberen Gelenkarms (14) angeordnet ist, **dadurch gekennzeichnet,** daß
- der Zugarm (18) und der obere Gelenkarm (14) an der Trageinheit bzw. am Fahrzeug (11) an eine um eine Achse (22) drehbare Lasche (20) angelenkt sind, wobei der Zugarm (18) oberhalb und der obere Gelenkarm (14) unterhalb der Achse (22) angelenkt sind und die Lasche (20) nur bei auf dem Boden aufgesetzter Plattform (12) zum Neigen der Plattformspitze um die Achse (22) drehbar ist und im übrigen gegen einen Anschlag (46) gedrückt wird.

2. Hubladebühne nach Anspruch 1,
**dadurch gekennzeichnet,** daß
- der Verkürzungshubweg mittels einer Anschlageinheit (60) variabel einstellbar ist, insbesondere ein mechanischer Endanschlag am Zugarm vorhanden ist.

3. Hubladebühne nach Anspruch 1 und/oder 2,
**dadurch gekennzeichnet,** daß der Zugarm (18) als, insbesondere hydraulisch betriebenes, Kolben-Zylinder-Aggregat ausgebildet ist.

4. Hubladebühne nach einem oder mehreren der vorstehenden Ansprüche,
**dadurch gekennzeichnet,** daß
- der Zugarm (18) im vorderen Endbereich an den oberen Gelenkarm (14) angelenkt ist.

5. Hubladebühne nach einem oder mehreren der vorstehenden Ansprüche,
**dadurch gekennzeichnet,** daß
- die Lasche (20) an einer Tragprofileinheit (24), insbesondere oberhalb des Gelenkarms (14), drehbar angeschlossen ist.

6. Hubladebühne nach einem oder mehreren der vorstehenden Ansprüche,
**dadurch gekennzeichnet,** daß
der untere Gelenkarm (16) als, insbesondere hydraulisch betriebenes, Kolben-Zylinder-Aggregat ausgebildet ist.

7. Hubladebühne nach einem oder mehreren der vorstehenden Ansprüche,
**dadurch gekennzeichnet,** daß
der Gelenkmechanismus mit einwirkendem Zugarm auf beiden seitlichen Außenbereichen vorhanden ist.

8. Hubladebühne nach einem oder mehreren der Ansprüche 2 bis 7,
**dadurch gekennzeichnet,** daß
die Kolbenseite/n des Kolben-Zylinder-Aggregats als zusätzliches Ölreservoir ausgebildet ist/sind.

9. Hubladebühne nach Anspruch 2 und 3,
**dadurch gekennzeichnet,** daß
- am Gelenkanschluß (18.2) des Kolben-Zylinder-Aggregats (18) zumindest eine in ihrer Einschraubtiefe veränderbare Schraube (68) vorhanden ist, an deren Kopf der Zylinder in eingezogener Stellung der Kolbenstange (64) des Kolben-Zylinder-Aggregats (18) anschlägt.

10. Fahrzeug (11), insbesondere Lastkraftfahrzeug,
**gekennzeichnet durch**
eine Hubladebühne nach einem oder mehreren der vorstehenden Ansprüche.

## Claims

1. Loading tailgate (10), in particular for vehicles (11),
- having a platform (12),
- having a carrying apparatus with a parallelogram-guided articulation mechanism with
-- a top articulation arm (14),
-- a bottom articulation arm (16) which is guided essentially parallel to the top articulation arm (14), it being the case that
-- the two articulation arms (14; 16) are articulated (14.1, 14.2; 16.1, 16.2) directly or indirectly on the platform (12) and on a carrying unit and/or on the vehicle (11), and
- having a further actuating arm (18) which is articulated on the articulation mechanism for the purpose of raising and lowering the platform (12),
- it being the case that the further actuating arm (18) is designed as a pulling arm (18) which can be lengthened and shortened,
- and that the pulling arm (18) is arranged above the top articulation arm (14),
characterized in that
- the pulling arm (18) and the top articulation arm (14) are articulated on the carrying unit and/or on the vehicle (11) by way of a link plate (20) which can be rotated about a spindle (22), it being the case that the pulling arm (18) is articulated above, and the top articulation arm (14) is articulated beneath, the spindle (22) and the link plate (20) can only be rotated about the spindle (22) when the platform (12) is positioned on the ground, this rotation being for the purpose of inclining the tip of the platform, and is otherwise pressed against a stop (46).

2. Loading tailgate according to Claim 1, characterized in that
- the shortening displacement path can be adjusted in a variable manner by means of a stop unit (60), in particular a mechanical end stop is provided on the pulling arm.

3. Loading tailgate according to Claim 1 and/or 2, characterized in that the pulling arm (18) is designed as an in particular hydraulically operated piston/cylinder subassembly.

4. Loading tailgate according to one or more of the preceding claims, characterized in that
- the pulling arm (18) is articulated on the top articulation arm (14) in the front end region.

5. Loading tailgate according to one or more of the preceding claims, characterized in that
- the link plate (20) is connected rotatably to a carrying-profile unit (24), in particular above the articulation arm (14).

6. Loading tailgate according to one or more of the preceding claims, characterized in that the bottom articulation arm (16) is designed as an in particular hydraulically operated piston/cylinder subassembly.

7. Loading tailgate according to one or more of the preceding claims, characterized in that the articulation mechanism with active pulling arm is provided on both lateral outer regions.

8. Loading tailgate according to one or more of Claims 2 to 7, characterized in that the piston side/s of the piston/cylinder subassembly is/are designed as an additional oil reservoir.

9. Loading tailgate according to Claims 2 and 3, characterized in that
- provided in the articulation connection (18.2) of the piston/cylinder subassembly (18) is at least one screw (68) which can be changed in terms of its screw-in depth and has the cylinder striking against its head when the piston rod (64) of the piston/cylinder subassembly (18) is in the retracted position.

10. Vehicle (11), in particular lorry, characterized by a loading tailgate according to one or more of the preceding claims.

## Revendications

1. Hayon élévateur (10), notamment pour des véhicules (11), avec
- une plate-forme (12),
- un dispositif porteur avec un mécanisme articulé en parallélogramme comprenant
-- un bras articulé supérieur (14),
-- un bras articulé inférieur (16), guidé essentiellement parallèlement au bras articulé supérieur (14),
-- les deux bras articulés (14, 16) étant articulés (14.1, 14.2 ; 16.1, 16.2) directement ou indirectement sur la plate-forme (12) et sur une unité porteuse ou encore sur le véhicule (11),
- et avec un bras d'actionnement supplémentaire (18) articulé au mécanisme articulé pour lever et abaisser la plate-forme (12),
- le bras d'actionnement supplémentaire (18) étant conçu comme bras de traction (18) avec possibilité d'allongement et de raccourcissement,
- le bras de traction (18) étant disposé au-dessus du bras articulé supérieur (14),
**caractérisé** en ce que le bras de traction (18) et le bras articulé supérieur (14) sont articulés, sur l'unité porteuse ou encore sur le véhicule (11), à une patte (20) rotative autour d'un axe (22), le bras de traction (18) étant articulé au-dessus de l'axe (22) et le bras articulé supérieur (14) en dessous de l'axe (22), et la patte (20) n'étant rotative que lorsque la plate-forme (12) est posée sur le sol, afin d'incliner l'extrémité de la plate-forme autour de l'axe (22), et étant autrement pressée contre une butée (46).

2. Hayon élévateur selon la revendication 1, **caractérisé** en ce que la course de raccourcissement peut être réglée de façon variable au moyen d'un ensemble de butée (60), une butée finale mécanique étant notamment présente sur le bras de traction.

3. Hayon élévateur selon la revendication 1 et/ou 2, **caractérisé** en ce que le bras de traction (18) est réalisé sous forme d'ensemble cylindre-piston, notamment à fonctionnement hydraulique.

4. Hayon élévateur selon une ou plusieurs des revendications précédentes, **caractérisé** en ce que le bras de traction (18) est articulé au bras articulé supérieur (14) dans la région terminale avant.

5. Hayon élévateur selon une ou plusieurs des revendications précédentes, **caractérisé** en ce que la patte (20) est raccordée à rotation à une unité porteuse profilée (24), notamment au-dessus du bras articulé (14).

6. Hayon élévateur selon une ou plusieurs des revendications précédentes, **caractérisé** en ce que le bras articulé inférieur (16) est réalisé sous forme d'ensemble cylindre-piston, notamment à fonctionnement hydraulique.

7. Hayon élévateur selon une ou plusieurs des revendications précédentes, **caractérisé** en ce que le mécanisme articulé est présent avec le bras de traction agissant sur les deux régions extérieures latérales.

8. Hayon élévateur selon une ou plusieurs des revendications 2 à 7, **caractérisé** en ce que le ou les côtés piston de l'ensemble cylindre-piston sont conçus comme réservoir supplémentaire de liquide hydraulique.

9. Hayon élévateur selon les revendications 2 et 3, **caractérisé** en ce qu'au moins une vis (68) de profondeur de vissage modifiable est présente au raccord d'articulation (18.2) de l'ensemble cylindre-piston (18), le cylindre butant contre la tête de cette vis dans la position rentrée de la tige de piston (64) de l'ensemble cylindre-piston (18).

10. Véhicule (11), notamment camion, **caractérisé** par un hayon élévateur selon une ou plusieurs des revendications précédentes.
